# EUROPEAN PATENT APPLICATION

(11) **EP 1 841 127 A1**
(43) Date of publication of application: **03.10.2007**
(21) Application number: 07103199.1
(22) Date of filing: 28.02.2007
(51) Int. Cl.: H04L 9/32, H04L 29/06

(54) **Server device with certificate revocation list acquiring function**

(30) Priority: 30.03.2006 JP 2006092763
(71) Applicant: MURATA KIKAI KABUSHIKI KAISHA, Kyoto (JP)
(72) Inventor: Ishiyama, Katsunori c/o Murata Kikai Kabushiki Kaisha, Fushimi-ku Kyoto 612-8686 (JP)
(74) Representative: W.P. Thompson & Co.

(57) **Abstract**

When a preset activation time is reached, or when a digital MFP 1 is activated manually, a determination is carried out as to whether or not a certificate revocation list is necessary to be acquired. Then, the digital MFP acquires and stores a certificate revocation list when necessary. The digital MFP determines whether or not a certificate of a signature confirmation execution list is included in the acquired certificate revocation list to determine whether or not an e-document of which a signature has been confirmed is invalid. When the e-document is invalid, the digital MFP creates text data indicating that a corresponding TSA and the e-document are invalid, and prints out the created text data by a printing unit. After deleting contents of the signature confirmation execution list, when the activated time is determined to be a preset activation time, the digital MFP is shut down.

## Description

### BACKGROUND OF THE INVENTION

### 1. Field of the Invention

The present invention relates to a server device with a certificate revocation list acquiring function including a function for acquiring a Certificate Revocation List (CRL) from a Certificate Authority (CA).

### 2. Description of the Related Art

Recently, a digital Multi Function Peripheral (MFP) including a copier function, a facsimile function, a printer function, and a scanner function or the like has assigned a timestamp to a document image scanned by a scanner, and stored the document image as an e-document. That is, since digital data can be easily altered compared with a paper document, timestamp technology has been used. The timestamp is technology for certifying the time when an electronic document has been fixed. The timestamp certifies since when such a document has existed, and the fact that the document has not been altered by third parties and also the creator himself from the time when the document was created.

When adopting such timestamp technology, first, a hash value of an electronic document is transmitted to a Time Stamping Authority (TSA). The TSA encrypts the hash value and information of accurate time clocked by an atomic clock, and creates a timestamp. Then, the TSA returns the created timestamp along with an electronic signature. The returned timestamp and the electronic signature are stored along with the electronic document as en e-document.

When verifying an e-document, the timestamp is decrypted, timestamp time information is confirmed, and a separately calculated hash value of the electronic document is compared with the hash value included in the timestamp to determine whether or not the e-document has been altered. Further, the hash value is a fixed-length value generated using an irreversible one-way function (hash function) from a given original text. The hash value is also known as a message digest. Since it is extremely difficult to obtain the original text from the hash value or create different texts having the same hash value, it is possible to confirm whether or not the original text is identical by comparing the hash values.

Meanwhile, when carrying out an encryption by the TSA, an encryption scheme such as a Public Key Infrastructure (PKI) is used. The known encryption schemes of the PKI include a common key encryption scheme that uses the same key (encryption algorism) for encrypting and decrypting a message, and a public key encryption scheme using different keys (a public key for encryption, and a secret key for decryption).

The public key is an encryption key of which a relationship with a user, who is a holder of the public key, has been formally authenticated by a CA, and which has been publicised to the general public, for example. The secret key is an encryption key that forms a pair with the public key. Data that has been encrypted by the public key can only be decrypted by the secret key. Data that has been encrypted by the secret key can only be decrypted by the public key. Therefore, the TSA using the public key encryption scheme uses the secret key to create a timestamp and to carry out an electronic signature.

An electronic certificate issued by the CA is data that certifies that a public key is valid. The electronic certificate includes a public key which is to be certified as being valid. The presence or absence of altering of the data can be detected by checking an electronic signature by using the public key, which has been certified to be valid by the electronic certificate. Further, the electronic signature has been carried out by a secret key that forms a pair with the above public key.

When carrying out an electronic signature, an electronic certificate is transmitted to a transmission destination. When a recipient checks the electronic signature, the recipient uses the public key to authenticate the electronic signature, and at the same time, confirms validity of the electronic signature. However, the electronic certificate expires by a report from an owner, a processing of a CA, or legal reasons or the like. For example, when an Integrated Circuit (1C) card or the like storing the secret key is stolen or lost, the owner notifies such a fact, and the electronic certificate is invalidated. When there are changes to the contents written in the electronic certificate, the CA invalidates the electronic certificate.

Therefore, when checking the electronic signature, it is necessary to confirm whether or not the electronic certificate has not been invalidated. When executing an electronic signature, it is also necessary to confirm whether or not the electronic certificate has not been invalidated. Therefore, a general CA periodically issues a certificate revocation list of electronic certificates, known as a Certificate Revocation List (CRL). A person who verifies the validity of the electronic certificate by a CRL normally downloads a CRL issued by the CA to a terminal device, and searches a status of the electronic certificate to be verified from the CRL stored in local to verify the validity of the electronic certificate.

As described above, when verifying an e-document, the validity of the electronic certificate is required to be confirmed by the CRL issued by the CA. However, when attempting to download the CRL from the CA at all times, it is necessary to maintain a device under an activated state at all times. This has caused drawbacks from an aspect of power consumption and duration of a hard disk drive (HDD) .

### SUMMARY OF THE INVENTION

In order to overcome the problems described above, preferred embodiments of the present invention provide a server device with a certificate revocation list acquiring function that can automatically acquire a certificate revocation list when validity of an electronic certificate is necessary to be confirmed, without activating the server device at all times.

According to an aspect of the present invention, a server device with a certificate revocation list acquiring function includes a certificate revocation list storage unit, and a control unit, which acquires a certificate revocation list from a CA and stores the acquired certificate revocation list in the certificate revocation list storage unit. The server device includes a function for activating the server device itself at a prescribed date and time. When a certificate revocation list is necessary to be acquired at activation, the control unit acquires the certificate revocation list from the CA and stores the acquired certificate revocation list in the certificate revocation list storage unit. When the certificate revocation list is not necessary to be acquired, the control unit executes a shutdown processing.

According to another aspect of the present invention, in the server device with the certificate revocation list acquiring function, the control unit determines whether or not the server device has been activated manually. When the server device has been activated manually, the control unit does not execute the shutdown processing. According to another aspect of the present invention, in the server device with the certificate revocation list acquiring function, activation date and time can be set.

According to the above-described aspects of the present invention, the server device is activated at a preset time, and in case of a presence of a scheduled job such as acquiring of a certificate revocation list, such a scheduled job is executed. In case of an absence of a scheduled job, a shutdown processing is executed and the server device is stopped. Therefore, the server device is not required to be activated at all times, and power consumption can be reduced. That is, in case of a server-type device, the device can be activated everyday at a fixed time by a clock function of Basic Input/Output System (BIOS). Until reaching the preset activation time, a main power source of the device is turned off. However, a microcomputer for controlling the device is under a standby state for comparing the present time with a preset reserved time, and when the activation time is reached, the microcomputer turns on the main power source to be supplied to the device.

When the server device is manually activated, there has been a problem that the server device is automatically shut down. However, according to the present invention, a determination is carried out as to whether or not the server device has been activated at a fixed time by comparing an activated time with the preset time. Therefore, the present invention can prevent the server device from being automatically shut down when the server device has been manually activated.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 illustrates an example of a network configuration of a system including a digital MFP.

Fig. 2 is a block diagram illustrating a hardware structure of a digital MFP.

Fig. 3 illustrates a detailed structure of a display and operation unit.

Fig. 4 illustrates a file structure of an e-document storage unit.

Fig. 5 illustrates an example of data stored in a management file.

Fig. 6 illustrates an example of information of TSA stored in a management file.

Fig. 7 illustrates an example of a certificate revocation list of each CA stored in a management file.

Fig. 8 illustrates an example of a signature confirmation execution list stored in a management file.

Fig. 9 illustrates an example of a document type selection screen of e-document scan.

Fig. 10 is a flowchart illustrating an operation carried out by an e-document scanning program.

Fig. 11 illustrates an example of a display of a list of account book e-documents.

Fig. 12 is a flowchart illustrating an operation carried out when executing e-document printing.

Fig. 13 is a flowchart illustrating an operation carried out by an activation program.

### DETAILED DESCRIPTION OF PREFERRED EMBODIMENTS

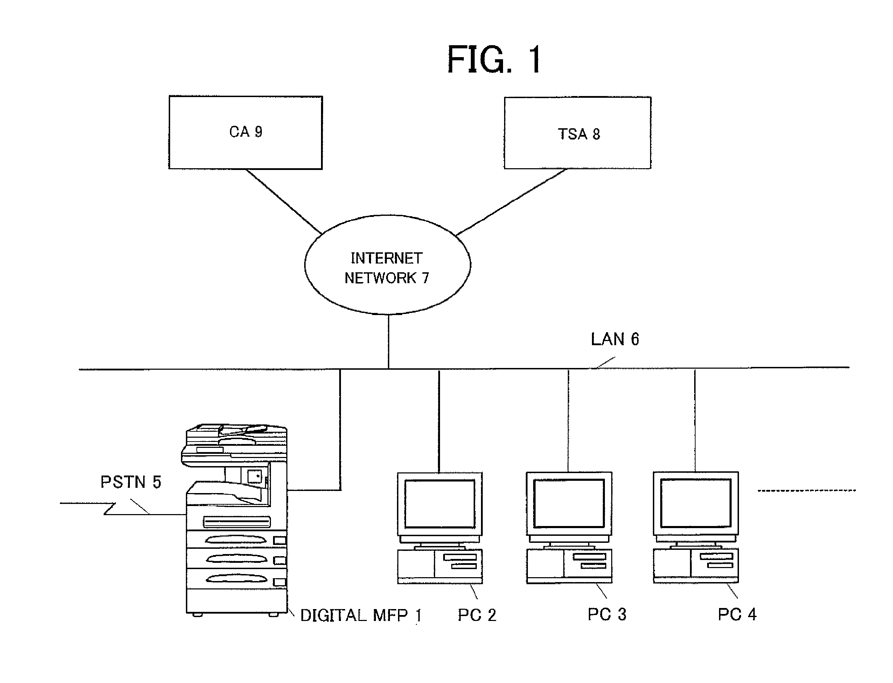

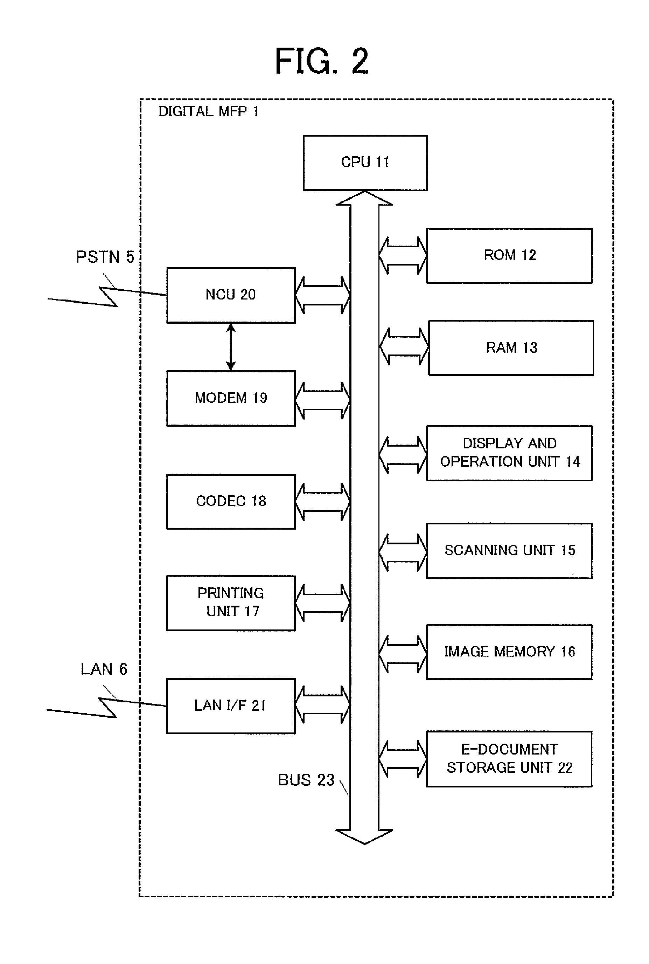

A description will be made of a server device with a certificate revocation list acquiring function as a digital MFP according to a preferred embodiment of the present invention. Fig. 1 illustrates an example of a network configuration of a system including a digital MFP. Fig. 2 is a block diagram illustrating a hardware structure of the digital MFP.

In Fig. 1, reference numeral 1 denotes a digital MFP, reference numerals 2, 3, 4, etc. respectively denote a Personal Computer (PC), reference numeral 5 denotes a Public Switched Telephone Network (PSTN), 6 denotes a Local Area Network (LAN), 7 denotes an Internet network, 8 denotes a Time Stamping Authority (TSA), and 9 denotes a Certificate Authority (CA). The digital MFP 1 includes functions of a copy mode, a printer mode, and a facsimile mode, and also includes a mail transmitting function. The digital MFP 1 is connected to the PSTN 5 and the LAN 6. A plurality of PCs 2, 3, 4, etc. as terminal devices are connected to the LAN 6. The LAN 6 is also connected to the Internet network 7. The digital MFP 1 can transmit and receive mail via the Internet network 7.

The TSA 8 is a time stamping authority. When the TSA 8 receives a hash value of scanned data from the digital MFP 1 via the Internet network 7, the TSA 8 uses a secret key of the TSA 8 to encode the received hash value along with information of accurate time clocked by an atomic clock, and creates a timestamp. Then, the TSA 8 returns the created timestamp, an electronic signature, and an electronic certificate of a secret key for the timestamp to the digital MFP 1. The CA 9 issues an "electronic certificate", which a pair of a user of a TSA or the like and a public key has been signed electronically by a secret key of a CA. A party, which verifies an electronic signature, verifies a signature of an electronic certificate to confirm whether or not the public key is valid. Further, the CA 9 periodically issues a certificate revocation list of the electronic certificate known as a Certificate Revocation List (CRL).

As illustrated in Fig. 2, the digital MFP 1 includes a Central Processing Unit (CPU) 11, a Read Only Memory (ROM) 12, a Random Access Memory (RAM) 13, a display and operation unit 14, a scanning unit 15, an image memory 16, a printing unit 17, a Coder-Decoder (CODEC) 18, a Modulator-Demodulator (MODEM) 19, a Network Control Unit (NCU) 20, a LAN interface (I/F) 21, and an e-document storage unit 22. Each of the units 11 to 22 is connected via a bus 23.

The CPU 11 controls each of hardware components of the digital MFP 1 via the bus 23. The CPU 11 executes various programs in accordance with a program stored in the ROM 12. The ROM 12 previously stores various programs and operation messages or the like necessary for an operation of the digital MFP 1. The RAM 13 is formed of a Static RAM (SRAM) or the like. The RAM 13 stores temporary data that generates when a program is executed.

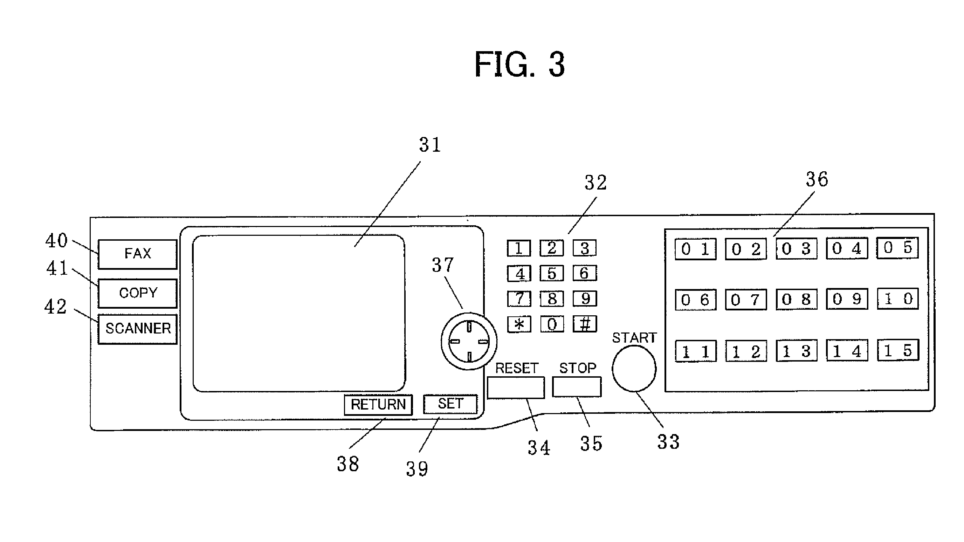

The display and operation unit 14 includes a display unit, which displays an operation status of the digital MFP 1 and displays an operation screen for various functions, and a plurality of keys for operating the digital MFP 1. As illustrated in Fig. 3, the display and operation unit 14 includes a Liquid Crystal Display (LCD) display unit 31 as the display unit and a plurality of operation keys. Touch-screen switches are provided in the LCD display unit 31. By pressing an item displayed on the LCD display unit 31, it becomes possible to select a corresponding item or to execute a function. As the operation keys, the display and operation unit 14 includes a ten-key numeric pad 32, a start key 33, a reset key 34, a stop key 35, a plurality of one-touch dial keys 36, a cross key 37, a return key 38, a set key 39, a FAX switching key 40, a copy switching key 41, and a scanner switching key 42 or the like. Further, the LCD display unit 31 may substitute a portion or all of these operation keys.

The scanning unit 15 includes an original placing table for an Auto Document Feeder (ADF) and/or a Flat Bed Scanner (FBS) or the like. The scanning unit 15 scans an original by a scanner using a Charge-Coupled Device (CCD) or the like, and outputs dot image data. The image memory 16 includes a Dynamic RAM (DRAM) or the like. The image memory 16 stores transmission image data, received image data, or image data scanned by the scanning unit 15. The printing unit 17 includes an electrophotographic printer device. The printing unit 17 prints out received data, copied original data, or print data transmitted from the remote PCs 2, 3, 4, etc.

The CODEC 18 encodes and decodes according to a prescribed protocol. For transmitting image data scanned from an original, the CODEC 18 encodes the image data by the Modified Huffman (MH), the Modified Read (MR) or the Modified MR (MMR) scheme. The CODEC 18 decodes image data received from a remote terminal. The CODEC 18 also encodes and decodes according to the Tagged Image File Format (TIFF) or the like, which is an image format generally used as a file attachable to electronic mail.

The MODEM 19 is connected to the bus 23, and includes functions as a faxmodem capable of carrying out facsimile communication. The MODEM 19 is also connected to the NCU 20, which is also connected to the bus 23. The NCU 20 is hardware for connecting and disconnecting an analog communication line. The NCU 20 connects the MODEM 19 to the PSTN 5 according to necessity. The LAN I/F 21 is connected to the LAN 6. The LAN I/F 21 receives a signal from the Internet network 7, and transmits a signal and/or data to the LAN 6. The LAN I/F 21 executes an interface processing such as a signal conversion and a protocol conversion.

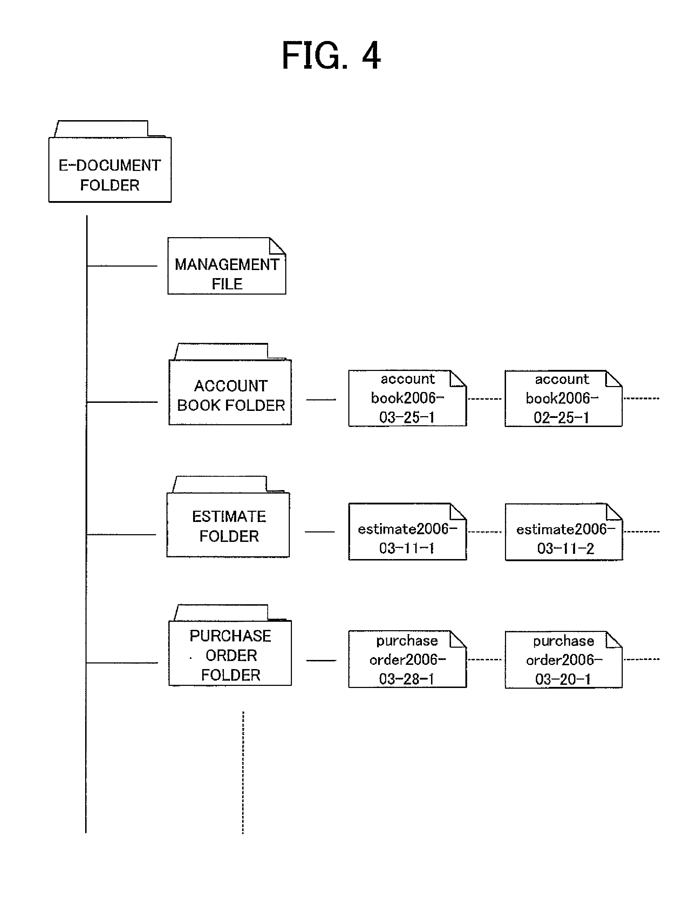

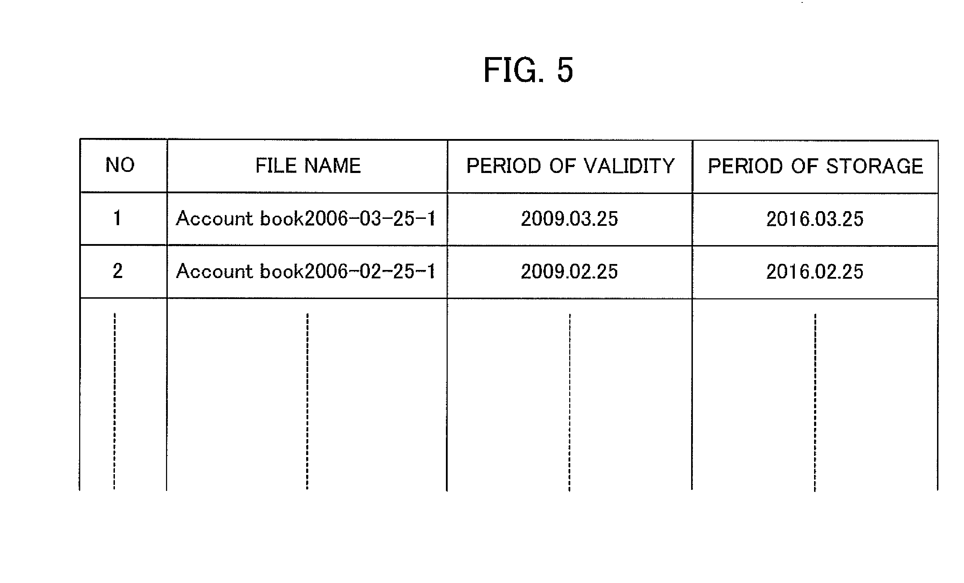

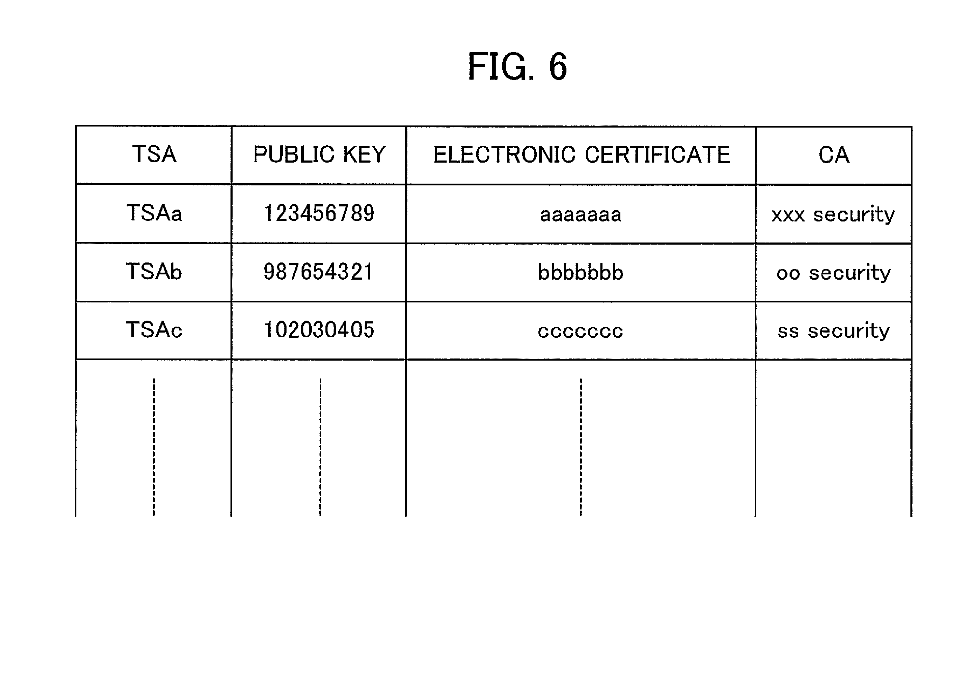

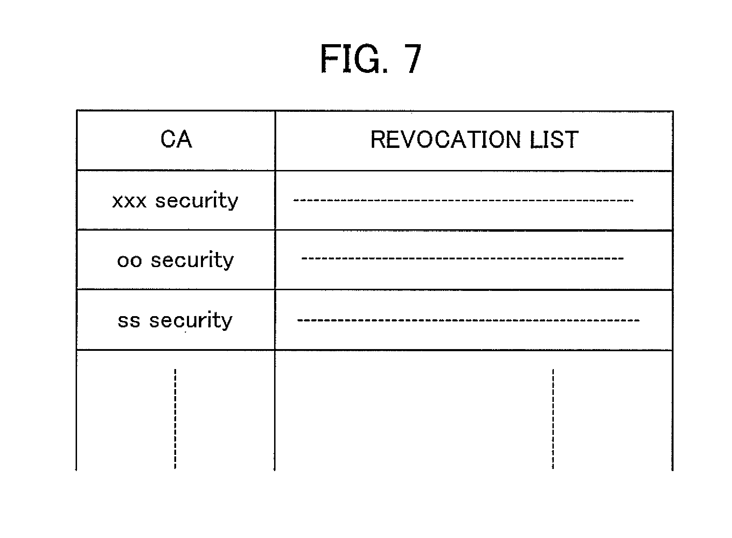

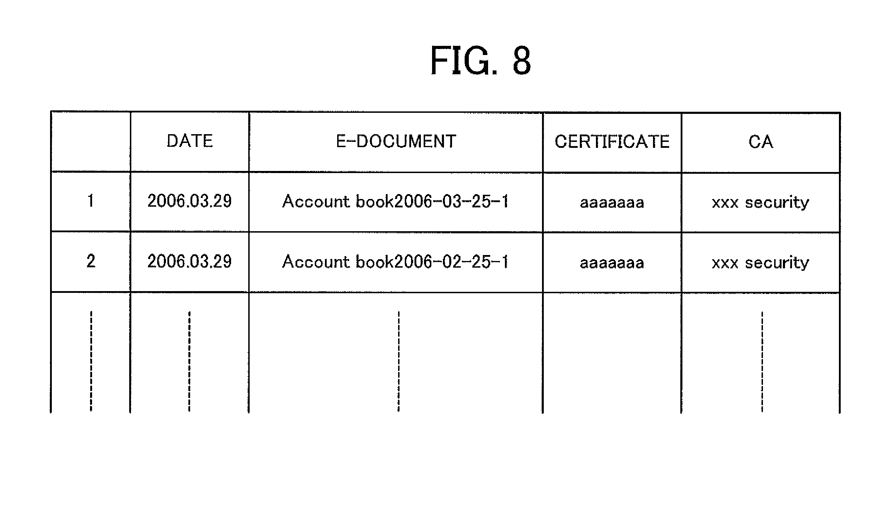

The e-document storage unit 22 is a storage unit which stores e-documents per document type. As illustrated in Fig. 4, the e-document storage unit 22 includes a management file of e-documents, and folders for each of the following documents: account book, estimate, purchase order, and/or memorandum etc. Each document folder stores a scanned document, a timestamp, and an electronic signature in a file assigned with a file name including a character string capable of identifying a document name, a date, and a consecutive number. The management file includes a file storing a file name of each e-document, a period of validity of a timestamp, and a period of storage of each e-document as illustrated in Fig. 5, a file storing a public key of each TSA, an electronic certificate, and a CA as illustrated in Fig. 6, a file of a certificate revocation list issued by each CA as illustrated in Fig. 7, and a file of a signature confirmation execution list storing execution date and time of electronic signature confirmation, an e-document name, an electronic certificate name and a name of CA as illustrated in Fig. 8.

In the digital MFP 1, when carrying out facsimile transmission, image data of an original is scanned by the scanning unit 15, compressed by the CODEC 18, and stored in the image memory 16. The compressed image data is retrieved from the image memory 16, modulated by the MODEM 19, and transmitted from the NCU 20 through the PSTN 5 to a communication destination. When receiving a facsimile, received image data is demodulated by the MODEM 19, stored in the image memory 16, decoded by the CODEC 18, and printed out by the printing unit 17.

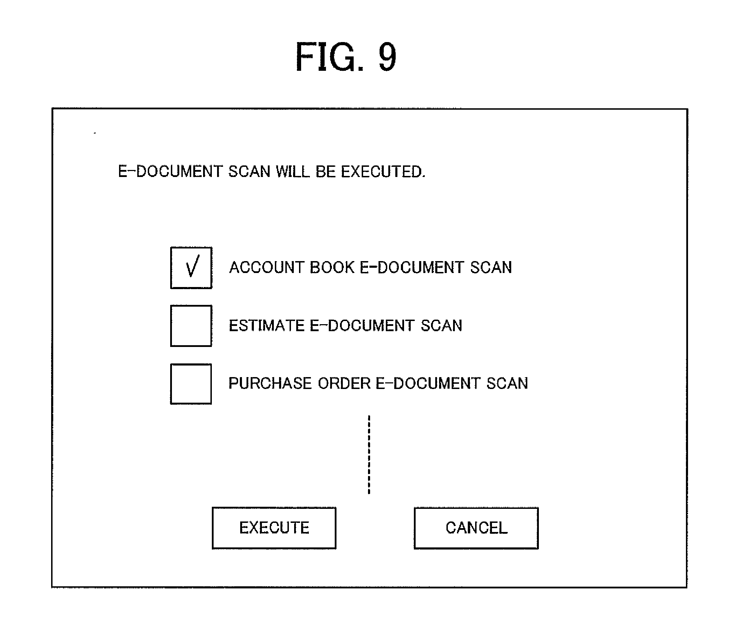

Meanwhile, the digital MFP may scan a document as described above and store the scanned document as an e-document. In the following, a description will be made of an operation carried out at e-document scan. When a user instructs e-document scan from the LCD display unit 31 of the display and operation unit 14, a document type selection screen for e-document scan as illustrated in Fig. 9 is displayed on the LCD display unit 31 of the display and operation unit 14. The document type selection screen displays a screen for selecting a document type to be executed with e-document scan, e.g. an account book e-document scan, an estimate e-document scan, and a purchase order e-document scan. When either one of the e-document scans is pressed and selected, by pressing an "EXECUTE" button, the digital MFP 1 executes the e-document scan.

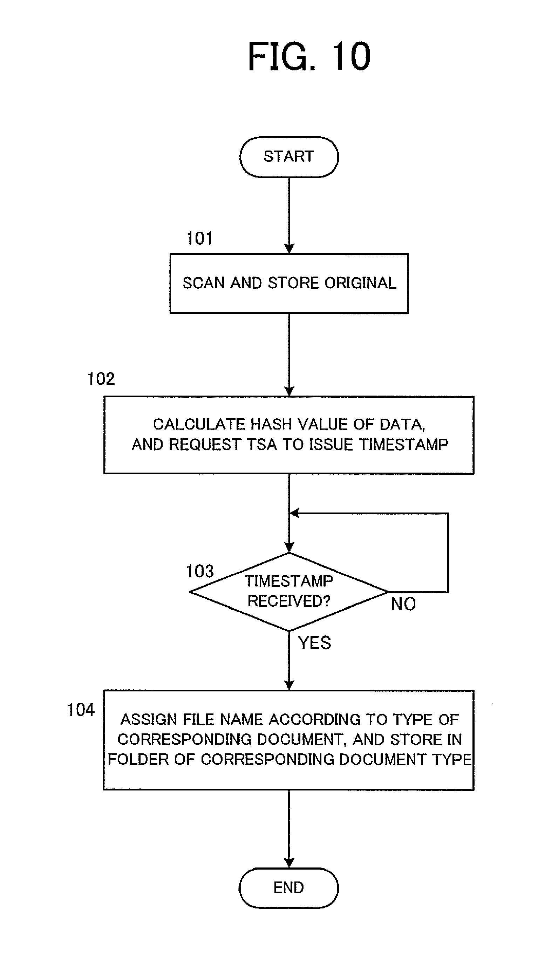

Fig. 10 is a flowchart illustrating an operation carried out by the CPU 11 when executing e-document scan. After selecting e-document scan of either one of document types, when the "EXECUTE" button is pressed, the CPU 11 starts an e-document scan program illustrated in the flowchart of Fig. 10. The image data of the original is scanned by the scanning unit 15, compressed by the CODEC 18, and stored in the image memory 16 (step 101). Next, the CPU 11 calculates a hash value of data stored in the image memory 16, and transmits the calculated hash value data to the TSA 8 via the LAN interface 21, the LAN 6, and the Internet network 7 to request the TSA 8 to issue a timestamp (step 102).

After requesting to issue a timestamp, the CPU 11 determines whether or not a timestamp has been received from the TSA 8 (step 103). When receiving a timestamp from the TSA 8, the CPU 11 creates a file name according to a type of the corresponding document. For example, when account book e-document scan has been selected at the document type selection screen for the e-document scan illustrated in Fig. 9, the CPU 11 creates a file name by "account book", "date", and "consecutive number". Then, the CPU 11 stores the scanned data, the timestamp, and the electronic signature in an account book folder under the created file name, and stores the file name, the period of validity of the timestamp, and the period of storage of the e-document in the management file (step 104). Further, a term of storage of a document can be designated for each document type, for example, ten years for account books, or five years for purchase orders. Therefore, the period of storage can be automatically decided according to a creation date of the e-document and the term of storage for the type of such e-document.

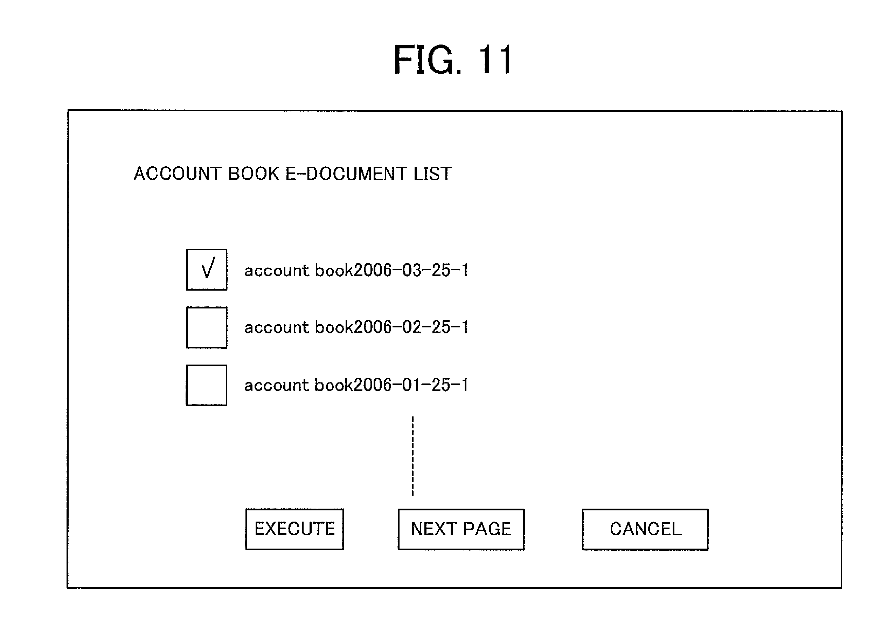

Next, a description will be made of an operation carried out when the user prints out the document stored in the e-document storage unit 22. When the user instructs to print out an e-document from the LCD display unit 31 of the display and operation unit 14, an e-document type selection screen is displayed on the LCD display unit 31 of the display and operation unit 14. For example, when account book e-document scan is designated in the e-document type selection screen, a list of account book e-documents is displayed as illustrated in Fig. 11. Since a list of documents included in the account book e-documents is displayed, when a desired document is selected and the "EXECUTE" button is pressed, the corresponding document can be printed out. Further, when a plurality of account book e-documents are stored, by pressing a "NEXT PAGE" button, a list of account book e-documents in the next page can be displayed.

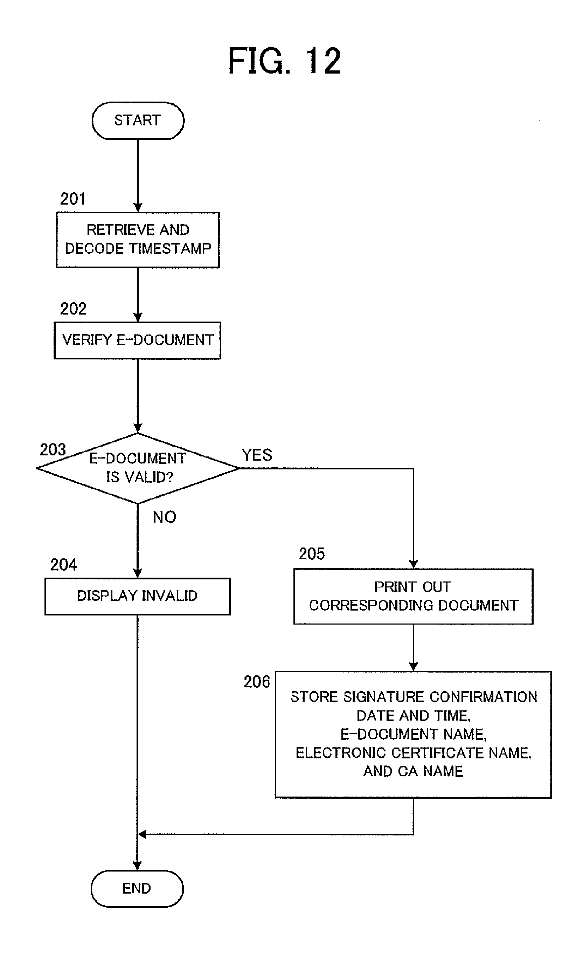

Fig. 12 is a flowchart illustrating an operation carried out by the CPU 11 when executing e-document printing. After selecting either one of e-documents, when the "EXECUTE" button is pressed, the CPU 11 starts an e-document printing program illustrated in the flowchart of Fig. 12. First, a timestamp of the corresponding document is retrieved from the e-document storage unit 22, and decoded (step 201). Then, a verification of such an e-document is carried out (step 202).

That is, when carrying out a verification of the e-document, time information of the decoded timestamp is confirmed, and the separately calculated hash value of the e-document data is compared with the hash value included in the timestamp. Accordingly, a presence or an absence of altering is detected, and an electronic signature is checked. The electronic signature is authenticated using the public key, and at the same time, validity of the electronic certificate is confirmed by referring to the certificate revocation list of Fig. 7 stored in the management file of the e-document storage unit 22 and confirming whether or not the electronic certificate of the TSA that has issued the timestamp has expired.

Next, the CPU 11 determines whether or not the e-document is valid (step 203). When the hash value of the e-document is different from the hash value included in the timestamp, or when the electronic certificate has expired, the LCD display unit 31 displays a message indicating that the e-document is invalid (step 204). Then, the program is ended. Meanwhile, when the CPU 11 determines that the e-document is valid, the CPU 11 decodes the data of the e-document by the COCEC 18, and prints out the decoded data by the printing unit 17 (step 205). Then, an execution date and time of signature confirmation, an e-document name, an electronic certificate name, and a CA name are stored in the management file of the e-document storage unit 22 as illustrated in Fig. 8 (step 206). Then, the program is ended.

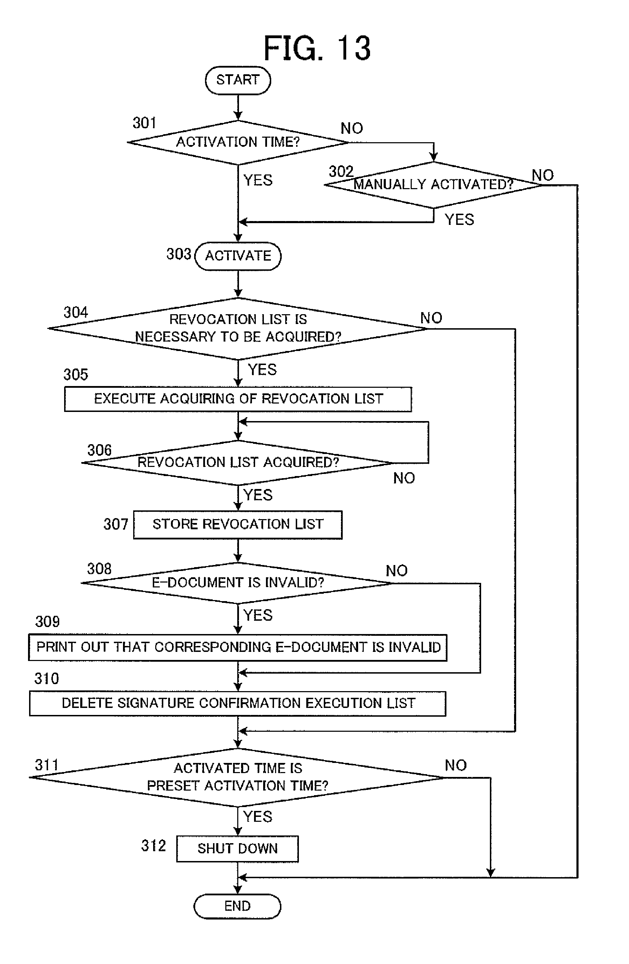

Meanwhile, the digital MFP 1 includes a timer function for activating and stopping the digital MFP 1 at a desired time, which can be set arbitrarily. When reaching an activation time, a main power source is turned on, and a job for acquiring a certificate revocation list is executed. That is, while the CPU 11 of the digital MFP 1 is under a standby state, the CPU 11 of is executing an activation program illustrated in the flowchart of Fig. 13 at each prescribed interval. When the activation program is started, the present time is compared with the preset activation time to determine whether or not the activation time has been reached (step 301). When a determination is made that the activation time has not yet been reached, the CPU 11 determines whether or not the digital MFP 1 has been activated manually (step 302) . When the CPU 11 determines that the digital MFP 1 has not been activated manually, the program is ended.

Meanwhile, when a determination is made at step 301 that the present time is the activation time, or when a determination is made at step 302 that the digital MFP 1 has been activated manually, the CPU 11 turns on the main power source to activate the digital MFP 1 (step 303). Then, the CPU 11 refers to the signature confirmation execution list stored in the management file stored in the e-document storage unit 22 to determine whether or not it is necessary to acquire the certificate revocation list (step 304). When a determination is made that it is necessary to acquire the certificate revocation list, the CPU 11 accesses the CA 9 listed in the signature confirmation execution list via the LAN interface 21, the LAN 6 and the Internet network 7 to acquire the certificate revocation list (step 305).

Next, the CPU 11 determines whether or not a certificate revocation list has been acquired from the CA 9 (step 306). When the CPU 11 determines that the certificate revocation list has been acquired, the CPU 11 stores the acquired certificate revocation list in a certificate revocation list of the corresponding CA in the management file stored in the e-document storage unit 22 (step 307) . Then, the CPU 11 determines whether or not a certificate of a signature confirmation execution list is included in the certificate revocation list to determine whether or not the corresponding e-document is invalid (step 308). When the CPU 11 determines that the corresponding e-document is invalid, the CPU 11 creates text data indicating that the corresponding TSA and the corresponding e-document are invalid, and prints out the created text data from the printing unit 17 (step 309).

When a determination is made at step 308 that the certificate of the signature confirmation execution list is not included in the certificate revocation list, or after printing out the text data at step 309 indicating that the corresponding TSA and the corresponding e-document are invalid, the CPU 11 deletes contents of the signature confirmation execution list (step 310). When a determination is made at step 304 that the certificate revocation list is not necessary to be acquired, or after deleting the contents of the signature confirmation execution list at step 310, the CPU 11 determines whether or not the activated time is the preset activation time (step 311) . When a determination is made that the activated time is not the preset activation time, the program is ended. When a determination is made that the activated time is not the preset activation time, a shut-down processing of the digital MFP 1 is executed, and the main power source is turned off (step 312). Then, the program is ended.

As described above, the digital MFP is activated at a preset time, and in case of a presence of a scheduled job such as acquiring a certificate revocation list, such a scheduled job is executed, and in case of an absence of a scheduled job, the digital MFP is shut down and stopped. Therefore, when it is necessary to confirm validity of an electronic signature, the certificate revocation list may be acquired automatically. Moreover, by comparing an activated time with the preset time, a determination is carried out as to whether or not the digital MFP has been activated at a fixed time. When a determination is made that the digital MFP has been activated manually, the digital MFP is not shut down. Therefore, it is possible to prevent the digital MFP from being forcibly shut down when being manually activated.

Further, in the above-described preferred embodiment, when the e-document of which the signature has been confirmed is determined to be invalid, text data indicating that the corresponding TSA and the corresponding e-document are invalid is printed out. However, as another preferred embodiment, when the digital MFP is manually activated, the display unit may display a message indicating that a corresponding TSA and a corresponding e-document are invalid.

In the above-described preferred embodiment, the digital MFP has been described as an example of a server device with a certificate revocation list acquiring function. However, the server device with the certificate revocation list acquiring function of the present invention can be applied to a facsimile server device and an e-document server or the like.

In the above-described preferred embodiment, a certificate revocation list is used for verifying an e-document. However, the server device with the certificate revocation list acquiring function of the present invention is also applicable when using a certificate revocation list for verifying a signature at electronic mail transmission and/or reception in a mail server.

While the present invention has been described with respect to preferred embodiments thereof, it will be apparent to those skilled in the art that the disclosed invention may be modified in numerous ways and may assume many embodiments other than those specifically set out and described above. Accordingly, the appended claims are intended to cover all modifications of the present invention that fall within the true scope of the present invention.

## Claims

1. A server device with a certificate revocation list acquiring function, the server device comprising:
means for storing a certificate revocation list;
means for controlling to acquire a certificate revocation list from a certificate authority and to store the acquired certificate revocation list in the means for storing; and
a function for activating the server device at a prescribed date and time;
wherein when the certificate revocation list is necessary to be acquired at activation, the means for controlling acquires the certificate revocation list from the certificate authority and stores the acquired certificate revocation list in the means for storing, and when the certificate revocation list is not necessary, the means for controlling executes a shutdown processing.

2. A server device according to claim 1, wherein the means for controlling determines whether or not the server device has been activated manually, and when the means for controlling determines that the server device has been activated manually, the means for controlling does not execute the shutdown processing.

3. A server device according to claim 1 or 2, wherein an activation date and time can be set.

4. A control method for a server device with a certificate revocation list acquiring function, the control method comprising the steps of:
storing a certificate revocation list;
acquiring a certificate revocation list from a certificate authority, and storing the acquired certificate revocation list;
activating the server device at a prescribed date and time;
when necessary to acquire a certificate revocation list at activation, acquiring the certificate revocation list from the certificate authority and storing the acquired certificate revocation list in a certificate revocation list storing means; and
when not necessary to acquire a certificate revocation list, executing a shutdown processing.

5. A method according to claim 4, including the further steps of:
determining whether or not the server device has been activated manually; and
not executing the shutdown processing when the server device has been activated manually.
